# Europäisches Patentamt
# European Patent Office
# Office européen des brevets

(19)

(11) Veröffentlichungsnummer: **0 003 217**
**B1**

(12) # EUROPÄISCHE PATENTSCHRIFT

(45) Veröffentlichungstag der Patentschrift:
**08.04.81**

(51) Int. Cl.³: **C 01 B  33/18,** C 09 C  1/30,
C 08 L  21/00, C 08 K  3/36

(21) Anmeldenummer: **78101481.6**

(22) Anmeldetag: **30.11.78**

(54) **Fällungskieselsäuregranulate, ihre Herstellung und ihre Anwendung.**

(30) Priorität: **30.01.78  DE 2803917**

(43) Veröffentlichungstag der Anmeldung:
**08.08.79 Patentblatt 79/16**

(45) Bekanntmachung des Hinweises auf die Patenterteilung:
**08.04.81 Patentblatt 81/14**

(84) Benannte Vertragsstaaten:
**BE CH DE FR GB NL**

(56) Entgegenhaltungen:
**DE-B-1 094 720**
**DE-B-1 807 714**
**FR-A-2 007 141**
**FR-A-2 111 148**
**GB-A-818 095**
**US-A-2 848 311**
**US-A-3 646 183**
**US-A-4 087 254**

(73) Patentinhaber: **Degussa Aktiengesellschaft, Degussa AG**
**Fachbereich Patente Rodenbacher**
**Chaussee 4 Postfach 1345, D-6450 Hanau 1 (Stadtteil**
**Wolfgang) (DE)**

(72) Erfinder: **Kilian, Eberhard, Am Schwaberg 6,**
**D-6450 Hanau 6 (DE)**
Erfinder: **Kreher, Alfons, Dr., AM Kappelgarten 19,**
**D-6000 Frankfurt 60 (DE)**
Erfinder: **Nauroth, Peter, Germanusstrasse 8,**
**D-5047 Wesseling (DE)**
Erfinder: **Türk, Günther, Dr., Liesingstrasse 3,**
**D-6450 Hanau 9 (DE)**

BUNDESDRUCKEREI BERLIN

## Fällungskieselsäuregranulate, ihre Herstellung und ihre Anwendung

Die Erfindung betrifft Fällungskieselsäuregranulate, das Verfahren zur Herstellung der Fällungskieselsäuregranulate aus einem wasserhaltigen Fällungskieselsäureteig und die Verwendung der Fällungskieselsäuregranulate.

Fällungskieselsäuregranulate werden von Gummiwarenherstellern verwendet, um Fällungskieselsäure unter Einsatz von möglichst kleinstem Transportraum als Füllstoff in zu vulkanisierende Kautschukmischungen auf einfache und staubarme Weise möglichst exakt einzudosieren.

Fällungskieselsäure kann man erhalten, indem man Schwefelsäure zur Wasserglaslösung unter Beibehaltung eines bestimmten pH-Wertes gibt, wobei diskrete Kieselsäurepartikel ausflocken, ohne daß ein Gelzustand durchschritten wird (vgl. DE-AS 1 049 843).

Es ist bekannt, Fällungskieselsäuregranulate auf trockenem Wege herzustellen, indem man pulverförmige Fällungskieselsäure unter Anwendung von Unterdruck und mechanischem Druck an rotierenden Walzen zuerst vorverdichtet und durch eine auf mindestens einer der Walzen angebrachte Profilierung die Fällungskieselsäuregranulate verpreßt (vgl. DE-PS 1 807 714).

Die auf diese Weise auf trockenem Wege und ohne Zusatz hergestellten Fällungskieselsäuregranulate zeichnen sich zwar durch gute Dispergierbarkeit und Gritfreiheit aus, besitzen jedoch aufgrund ihrer Herstellung einen relativ hohen Feinanteil und neigen somit zum Stauben. Auch ist ihre Transport- und Silierstabilität nicht hoch, so daß selbst nach dem Absieben durch Abrieb ein hoher Feinanteil gebildet wird, welcher Anlaß zur Staubbelästigung bei der Handhabung des Granulates beim Verbraucher gibt. Neben diesen Nachteilen des Fällungskieselsäuregranulates weist auch das Herstellverfahren der Trockengranulierung gemäß DE-PS 1 807 714 den Nachteil auf, daß bei der Granulierung von feinvermahlenen Fällungskieselsäurepulvern auszugehen ist und der beim Brechen und Sieben anfallende hohe Feinanteil der Fällungskieselsäure der Mühle im Kreislauf wieder zugeführt werden muß, und somit die Ausbeute und Kapazität der Anlage gemindert werden.

Diese Nachteile lassen sich — wie eine Abschätzung der physikalischen Randbedingungen beim Trockenpreßvorgang ergibt — durch Modifizierung der Trockengranulier-Technologie nur wenig beeinflussen. Eine höhere Härte der Granulate verschlechtert deren Dispergierbarkeit und erhöht die ohnehin schon hohe Reparaturanfälligkeit der Sintermetallwalze wegen der Anwendung höherer Drucke. Außerdem läßt sich der scharfkantige, irreguläre Charakter der Granulate nur durch eine totale Veränderung der formgebenden Walze verändern. Die irreguläre Form der Granulate ist ein Grund für deren hohen Abrieb.

Weiterhin ist aus der DE-OS 2 150 346 bekannt, Fällungskieselsäuregranulate durch Naßgranulierung von Fällungskieselsäurepulver mit verdünnter Schwefelsäure als Granulierhilfsmittel herzustellen. Die erhaltene Fällungskieselsäuregranulate weisen jedoch neben schlechter Dispergierbarkeit einen sehr niedrigen pH-Wert auf, wodurch dieses Verfahren schwer lösbare Korrosionsprobleme an den benutzten Apparaten beinhaltet.

Die DE-OS 2 030 172 beschreibt die Herstellung von staubarmen Kieselsäure-Kautschuk-Formulierungen mit guten Dispergiereigenschaften und herabgesetztem Wassergehalt. Zielsetzung dieses Verfahrens ist jedoch die Herstellung von Kieselsäure-Kautschuk-Batchen, wobei der granuläre Charakter dieser Stoffe nicht im Vordergrund steht. Die Anwendung dieses Herstellverfahrens stößt jedoch wegen der hohen Belastung des Abwassers durch organische Restsubstanzen auf erhebliche, umweltschutzbedingte Schwierigkeiten.

Weiterhin ist aus der DE-OS 2 355 570 ein Verfahren zur Herstellung von Kieselsäure-Öl-Granulaten auf dem Wege der Naßverperlung unter Zuhilfenahme von Extenderölen bekannt. Dabei wird ein Weg über die Ölemulsionsphase beschritten. Der hohe Ölanteil der erhaltenen Fällungskieselsäuregranulate bewirkt eine relativ gute Dispergierbarkeit. Jedoch schränkt der vorgegebene, häufig bei der Anwendung der Granulate gar nicht erforderliche, hohe Anteil an Extenderöl den Einsatz der auf diese Weise hergestellten Fällungskieselsäuregranulate stark ein.

Gegenstand der Erfindung sind Fällungskieselsäuregranulate, welche gekennzeichnet sind durch die folgenden physikalisch-chemischen Kenndaten:

| | |
|---|---|
| Stampfgewicht (DIN 53 194) | 200 – 320 g/l |
| l/d-Verhältnis | $0,8 \leq l/d \leq 3,5$ |
| Einzelgranulathärte | 80 – 175 g |
| Staubgehalt (DIN 53 583) | 0,2 – 0,4 Gew.-% |
| Abrieb (DIN 53 583) | 0,2 – 0,3 Gew.-% |

Ein weiterer Gegenstand der Erfindung ist ein Verfahren zur Herstellung von Fällungskieselsäuregranulaten mit den folgenden physikalisch-chemischen Kenndaten:

| | |
|---|---|
| Stampfgewicht (DIN 53 194) | 200 – 320 g/l |
| l/d-Verhältnis | $0,8 \leq l/d \leq 3,5$ |
| Einzelgranulathärte | 80 – 175 g |

| Staubgehalt (DIN 53 583) | 0,2 – 0,4 Gew.-% |
| Abrieb (DIN 53 583) | 0,2 – 0,3 Gew.-% |

aus einem wasserhaltigen Fällungskieselsäurefilterteig, welches dadurch gekennzeichnet ist, daß man eine Fällungskieselsäuresuspension während und/oder nach deren Bildung intensiv schert, die Fällungskieselsäure abfiltriert, wäscht, zu dem so erhaltenen Fällungskieselsäurefilterkuchen pulverförmige Fällungskieselsäure hinzumischt, wobei man die Zugabe der pulverförmigen Fällungskieselsäure zu dem Fällungskieselsäurekuchen kontinuierlichen oder diskontinuierlichen in Mischern derart durchführt, daß keine Formgebung der Fällungskieselsäuremasse stattfindet, die Fällungskieselsäuremasse rieselfähig bleibt und dabei nicht in den thixotropen Pastenzustand übergeht, anschließend die so erhaltene Fällungskieselsäuremasse bei einem Feststoffgehalt von 28 bis 40 Gew.-%, vorzugsweise von 30 bis 34 Gew.-%, mit einem Granulator zur Herstellung von Fällungskieselsäuregranulaten unter Einhaltung eines definierten Verhältnisses von Scherspannung/ Zeiteinheit $\tau$, wobei ein Bereich von

$$1 \times 10^{-3} \text{ kg/cm}^2 \cdot \text{s} \leq \tau \leq 3 \times 10^{-3} \text{ kg/cm}^2 \text{ s,}$$

eingehalten wird, und im Granulator der Düsendurchmesser (d) sowie die Düsenlänge (l) innerhalb 1,0 mm $\leq$ d $\leq$ 2,0 mm bzw. 1,0 mm $\leq$ l $\leq$ 4 mm beträgt, verpreßt und diese einer Kurzzeittrocknung unterwirft.

Die Scherung der Fällungskieselsäuresuspension kann während des gesamten Zeitraumes ihrer Bildung erfolgen. Diese Maßnahme läßt eine gezielte Steuerung der Granulathärte, der Dispergierbarkeit, des Schüttgewichtes, des Abriebs der Granulate zu. Die Scherung kann aber auch nach der Bildung der Fällungskieselsäure bei alkalischem, vorzugsweise bei einem pH-Wert von 7 – 12, bzw. saurem, vorzugsweise bei einem pH-Wert von 2 – 7, stattfinden. Die Scherung kann weiterhin nach Zugabe von 1 – 5 Gew.-% stabilisierter und mit Alterungsschutzmitteln versetzter Latexemulsion vorgenommen werden (z. B. einer 22%igen Emulsion von Naturkautschuk in Wasser).

Als Additiv kann man auch 1 – 5 Gew.-% mit Wasser mischbarer mehrwertiger Alkohole, z. B. Äthylenglykol einsetzen, welche der Fällungssuspension direkt zugesetzt werden. Die der Scherung zu unterwerfenden Fällungskieselsäuresuspension kann einen Feststoffgehalt von 30 – 100 g/l aufweisen. Die Scherdauer kann vorzugsweise zwischen 10 und 120 Minuten betragen, wobei 130 Minuten nicht überschritten werden sollen. Zum Scheren können Dissolver, Turbinenrührer, Ultraturrax, Dispax-Reaktoren sowie Kreiselpumpen als Scheraggregate verwendet werden. Die Scherung der Kieselsäuresuspension erfolgt zum Zwecke des Abbaus von Gritteilchen, die die Qualität (Dispergierbarkeit) des fertigen Kieselsäuregranulates sonst negativ beeinflussen könnten.

Die Filtration der gescherten Fällungskieselsäuresuspension kann mit Hilfe von Filterpressen verschiedener Bauart (Kammerpressen, Rahmenpressen, Preßfilterautomaten) sowie mit Drehfiltern (Vakuum- und Druckdrehfilter) vorgenommen werden. Der Feststoffgehalt des erhaltenen Kieselsäurefilterkuchens kann zwischen 15 und 28 Gew.-% liegen.

Zur Herstellung einer rieselfähigen, verformbaren Fällungskieselsäuremasse kann zunächst pulverförmige, feinteilige Fällungskieselsäure in einem Mischaggregat — z. B. einem Pflugschar-Mischer — vorgelegt werden. Zu dieser Vorlage kann dann anteilweise vorzerkleinerter Kieselsäurefilterkuchen zugegeben werden, wobei der Feststoffgehalt der sich bildenden Kieselsäuremasse Werte zwischen 28 und 40 Gew.-% annehmen kann. Bevorzugterweise kann bei einem Feststoffgehalt von 30 – 34 Gew.-% gearbeitet werden.

Das feinteilige Fällungskieselsäurepulver, welches dem Fällungskieselsäurefilterkuchen zugemischt wird, kann beispielsweise durch Trocknung und Vermahlung des zugrunde liegenden Filterkuchens gewonnen werden.

Dabei kann man total gescherte, partiell gescherte und nicht gescherte Fällungskieselsäure des gleichen Grundfällungstyps als Fällungskieselsäurepulver einsetzen. Während des Vermischens des Fällungskieselsäurepulvers mit dem Filterkuchenteig für die nachfolgende Naßgranulation können dem Fällungskieselsäurefilterkuchenteig auch 1 – 5% (bezogen auf Trockensubstanz) an Additiven, wie z. B. mit Wasser mischbare, mehrwertige Alkohole, z. B. Äthylenglykol oder 1 – 5 Gew.-% stabilisierter und mit Alterungsschutzmitteln versetzter Latexemulsion, z. B. einer 22%igen Emulsion von Naturkautschuk in Wasser, zugegeben werden. Grundsätzlich ist beim Vorgang der Zugabe des Fällungskieselsäurepulvers zu dem Fällungskieselsäurefilterkuchenteig darauf zu achten, daß man die Aufbereitung des Fällungskieselsäurefilterkuchenteigs zu einer verformbaren Fällungskieselsäuremasse — sei es nun auf kontinuierlich oder diskontinuierlichem Wege, derart durchführt, daß beim Mischvorgang keine Formgebung desselben stattfindet, die Fällungskieselsäuremasse rieselfähig bleibt und nicht in den thixotropen Pastenzustand übergeht.

Die Formgebung der auf diese Mischweise gewonnenen Fällungskieselsäuremasse kann mit einem Feststoffgehalt von 28 bis 40 Gew.-%, vorzugsweise 30 – 34 Gew.-%, mit Hilfe sogenannter Naßgranulatoren, Innenwalzengranulatoren und oszillierenden Granulatormaschinen erfolgen. Vorzugsweise können bei der Herstellung von Fällungskieselsäuregranulaten Zahnwalzengranulatoren, insbesondere Zahnwalzengranulatoren mit folgenden Kenndaten eingesetzt werden:

Zwei-Zahnwalzenformmaschine mit einer Leistung von 4 kW. Regelgetriebe 1 : 4, angewandte mittlere Antriebsdrehzahl $n_2 = 40$ min$^{-1}$

25 Zähne, Modul 8, Teilkreisdurchmesser: 200 mm

Arbeitsbreite: 40 mm

Düsendurchmesser: 1,5 mm

Düsenlänge: 4 mm

Durchsatzleistung: ca. 150 kg/h Kieselsäuremasse

mit 33% Trockensubstanz

Die erhaltenen Fällungskieselsäuregranulate können in Form von Zylindergranulaten anfallen, welche Abmessungen von 1 mm Durchmesser × 1 mm Höhe bis 1,5 mm Durchmesser × 5 mm Höhe aufweisen.

Bei der Granulierung der Fällungskieselsäuremasse ist darauf zu achten, die die angewandte Scherspannung folgender Bedingungen genügt:

$$1 \times 10^{-3} \, \text{kg/cm}^2 \, \text{s} \leq \tau \leq 3 \times 10^{-3} \, \text{kg/cm}^2 \, \text{s}$$

und daß ferner der angewandte Düsendurchmesser sowie die Düsenlänge innerhalb

$$1,0 \, \text{mm} \leq d \leq 2 \, \text{mm} \quad \text{bzw.} \quad 1,0 \, \text{mm} \leq l \leq 4 \, \text{mm}$$

liegen. Die Granulierung der feuchten Fällungskieselsäuremasse erfordert eine definierte, eingegrenzte Scherspannung/Zeiteinheit: $\tau$, die als Massenstrom auf den Düsenquerschnitt bezogen wird. Bei Scherspannung von $\tau \geq 3 \times 10^{-3}$ kg/cm$^2$ s — z. B. bei $\tau = 6$ kg/cm$^2$ s — fließt das verpreßte Feuchtgut und man erhält für die Weiterverarbeitung nicht geeignetes, pasteuses Preßgut. Bei $\tau \leq 1,0 \times 10^{-3}$ kg/m$^2$ s, z. B. bei $\tau = 0,5 \times 10^{-3}$ kg/cm$^2$ s, sind die Formpreßlinge von so lockerer Struktur, daß sie während des Trockenvorgangs zu etwa 50% unter Bildung eines hohen Staubanteils zerfallen.

Zur Kurzzeit-Trocknung können folgende Vorrichtungen verwendet werden: Fließbett-Trockner, heißgasbeaufschlagter Drallrohrtrockner und Stromtrockner. Die Kurzzeittrocknung ist im Hinblick auf eine spontane Durchtrocknung der Naßgranulate von Vorteil, weil Schrumpfungs- und damit Verhärtungsprozesse nicht so ausgeprägt ablaufen wie beim konventionellen Trocknungsprozeß. Durch die Wahl der obenerwähnten Trocknertypen wird auch die Wahrscheinlichkeit der Gritbildung, die durch Wandkontakte des feuchten Materials während der Trocknung auftreten kann, drastisch vermindert. Aufgrund der definierten Granulatform ist eine gleichmäßige Kurzzeittrocknung begünstigt.

Die zylinderförmigen Granulate können vorzugsweise in einem Schwingfließbett-Trockner mit 0,3 mm Durchmesser der Lochung des Ausströmbodens getrocknet werden. Dabei kann eine Anströmgeschwindigkeit von einigem m/sec und eine Fließbetthöhe von 150 bis 300 mm eingehalten werden. Die Trocknungstemperatur kann zwischen 200−500°C gewählt werden, was einer Trocknungszeit von 5−25 Minuten entspricht. Der bei der Fließbett-Trocknung anfallende Kieselsäurestaub beträgt ca. 5−10% (bezogen auf Trockengranulat). Er kann ohne Vermahlung dem Fällungskieselsäurefilterkuchen zugeführt werden.

Das erfindungsgemäße Verfahren weist die folgenden technologischen Vorteile auf:

— Der bei der Fließbett-Trocknung entstehende Staubanteil der Fällungskieselsäuregranulate wird durch die Trockenluft aufgetragen und somit ohne zusätzlichen Arbeitsgang — wie z. B. eine Siebung — entfernt. Es resultieren Fällungskieselsäuregranulate, die einen sehr niedrigen Staubanteil (1−2% bzw. 0,2 bis 0,4 Gew.-% nach DIN 53 583) aufweisen.

— Die Rückführung dieses Staubes (ca. 10%) in die Filterkuchenaufbereitung ist ohne Vermahlung möglich.

— Es lassen sich auf einfachem Wege definierte Formen von Fällungskieselsäuregranulaten herstellen, woraus hohes Schüttgewicht, gute Stabilität (geringer Abrieb), niedriger Staubanteil und definierte, kurze Trocknungszeiten der Fällungskieselsäuregranulate resultieren. Aufgrund der definierten kurzen Trockenzeit tritt nur eine geringe Schrumpfung und damit nur eine geringe Kornverhärtung ein.

Die geringe Kornverhärtung ist wiederum eine Voraussetzung für die gute Dispergierbarkeit des erfindungsgemäßen Fällungskieselsäuregranulates.

Aufgrund ihres Eigenschaftsbildes weisen die formstabilen, staubarmen Fällungskieselsäuregranulate alle Voraussetzungen einer leichten Handhabung, einer guten Transportstabilität und einer exakten Dosierbarkeit bei kontinuierlich ablaufenden Mischprozessen auf. Somit lassen sie sich vorteilhaft in der kautschukverarbeitenden, nach Rationalisierung strebenden Industrie mit Erfolg einsetzen.

Die Verwendung der erfindungsgemäßen Fällungskieselsäuregranulate als Verstärkerfüllstoff in

**0 003 217**

Elastomeren, Thermoplasten und Duromeren beruht unter anderem auch auf ihrer hervorragenden Dispergierbarkeit, die nicht zuletzt eine Folge der beim Herstellprozeß gewählten Bedingungen der Scherung und der Kurzzeittrocknung ist.

Der technische Fortschritt der erfindungsgemäßen Fällungskieselsäuregranulat beruht auf zwei wichtigen, bisher nicht erreichten Eigenschaften: niedriger Staubgehalt und geringe Abriebneigung. Zur Demonstration der deutlichen Überlegenheit dieser beiden Eigenschaften im Vergleich zu den Kieselsäuren-Weichgranulaten gemäß dem Stand der Technik sei auf die Werte der nachfolgenden Tabelle verwiesen:

| Eigenschaft | Erfindungsgemäße Fällungskieselsäure-granulate | Fällungskiesel-säuregranulate gemäß DE-PS 18 07 714 |
| --- | --- | --- |
| Staubgehalt (DIN 53 583) | 0,2%—0,4% | 21,6% |
| Abrieb (DIN 53 583) | 0,2%—0,3% | 4,4% |
| Staubgehalt*) | 0,5%—2,0% | 13,5% |
| Abrieb*) | 0,15% | — |

*) Bestimmungsmethode siehe unten.

Wie die Gegenüberstellung der Staubgehalte der erfindungsgemäßen Fällungskieselsäuregranulate und der Kieselsäuregranulate gemäß DE-PS 1 807 714 zeigt, liegen diese bei den erfindungsgemäßen Produkten um 1—1$^{1}/_{2}$ Größenordnungen niedriger als bei den bisher hergestellten Produkten. Auch in bezug auf den Abrieb zeigen die erfindungsgemäßen Fällungskieselsäuregranulate bemerkenswerte Vorteile: So liegt der DIN-Abrieb der erfindungsgemäßen Kieselsäuregranulate um eine Größenordnung niedriger als der DIN-Abrieb der herkömmlichen Fällungskieselsäuregranulate.

Die Bestimmung des Staubgehaltes und des Abriebverhaltens nach der DIN-Vorschrift 53 583 ist bekannt. Unabhängig davon wurde eine neue Bestimmungsmethode für Staubgehalt und Abriebverhalten von Fällungskieselsäuregranulaten entwickelt:

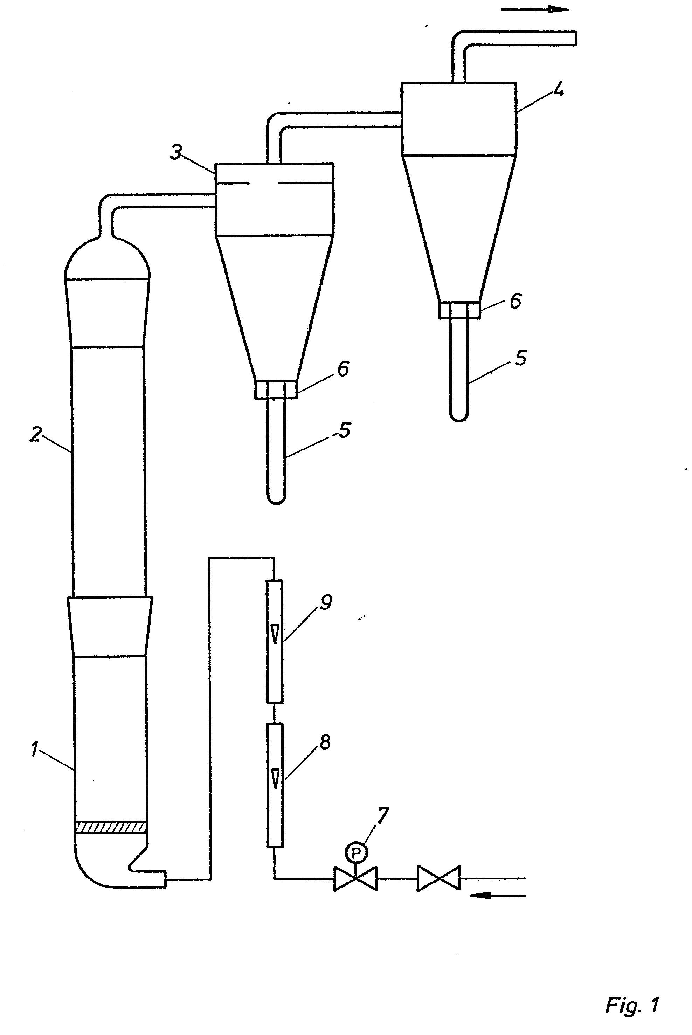

Das Meßprinzip beruht darauf, daß ein Luftstrom mit definierter Geschwindigkeit durch dieses Kieselsäuregranulat geleitet wird, und die Feinanteile des Kieselsäuregranulates in einem kleinen Meßzyklon abgeschieden werden. Der Wirkungsgrad der kleinen Zyklone liegt bei 99%. Fig. 1 zeigt die Apparatur zur Messung des Staubgehaltes. Bei Kieselsäuregranulaten werden 10 g eingewogen, und es wird eine Luftgeschwindigkeit von 0,1 m/sec eingestellt.

Es wird folgende Arbeitsweise befolgt: Das in Fig. 1 dargestellte Gerät [es besteht aus der Glasfritte 1 (G3) mit Tubus, einem Glasrohr 2, in welchem die Luftgeschwindigkeit 0,1—0,5 m/sec beträgt, den Meßzyklonen 3 und 4, welche aus Glas hergestellt wurden und mit den Auffangrohren 5 sowie mit dem Schraubverschluß 6 versehen sind, dem Druckminderventil 7, dem Strömungsmesser 8 (Meßbereich 1) und dem Strömungsmesser 9 (Meßbereich 2)] wird an ein Druckluftnetz (maximal 10 bar) angeschlossen. Die Einstellung der Luftmenge erfolgt durch ein Druckminderventil, das bei Beginn der Messung auf »drucklos« eingestellt wird. Die Einstellung der Luftgeschwindigkeit erfolgt durch zwei Strömungsmesser mit je einem Meßbereich von 0—0,1 m/sec und 0,1—0,5 m/sec. Die Kieselsäure wird in die untere Schliffverbindung eingefüllt. Nach einer Meßzeit von fünf Minuten wird die zurückgebliebene und die im Zyklon abgeschiedene Kieselsäure ausgewogen und der prozentuale Anteil berechnet.

Zur Untersuchung der Transportstabilität werden 100 g granulierte Kieselsäure in einer DIN-Blechdose mit Eindruckdeckel und den Abmessungen $\varnothing = 100$ mm, h = 110 mm, 24 Stunden lang auf einem Rollblock mit 150 UpM gedreht. Anschließend wird der Staubanteil bestimmt. Zuvor war mittels der beschriebenen Methode der Staubanteil im Original ermittelt worden.

Die vorgelegten Vergleichsmessungen zeigen die deutliche Überlegenheit der erfindungsgemäßen Fällungskieselsäuregranulate gegenüber den Fällungskieselsäuregranulaten gemäß dem Stande der Technik. Die Staubarmut der erfindungsgemäßen Fällungskieselsäuregranulate ermöglicht es, den vom deutschen Gesetzgeber vorgeschriebenen MAK-Wert (Maximale Arbeitsplatz-Konzentration) für inerte Stäube (8 mg/Nm$^3$) — amorphe Kieselsäure zählt dazu — beim Anwender einzuhalten. Da der Trend der Gesetzgebung in vielen Ländern der Welt künftig eine weitere Herabsetzung des MAK-Wertes (in England wurde soeben der MAK-Wert von 3 mg/Nm$^3$ eingeführt) erwarten läßt, ist der durch die Erfindung erzielte technische Fortschritt unbestritten.

Das erfindungsgemäße Verfahren wird anhand der folgenden Beispiele näher erläutert und beschrieben:

5

0 003 217

## Beispiel 1

Zur Herstellung einer Fällungskieselsäuresuspension wird eine Fällungsapparatur benutzt, die in Ergänzung zu den bekannten Standardapparaturen mit einem Dispergiergerät ausgerüstet ist, und zwar mit einem 700-l-Dissolver mit einem Scheibendurchmesser von 300 mm und einer Umfangsgeschwindigkeit von 21 m sec$^{-1}$. Zur Fällung werden zunächst 470 l heißes Wasser und 73,4 l Natronwasserglas (Dichte: 1,17 g/cm$^3$, Modul SiO$_2$ zu Na$_2$O = 3,30) unter Rühren auf 83° erhitzt. In diese alkalische Fällungsvorlage werden während der folgenden 90 Minuten unter Rühren und fortlaufendem Dispergieren gleichzeitig Natronwasserglas (Dichte: 1,35 g/cm$^3$, Modul = 3,30) mit 77 l/h und 55%ige Schwefelsäure (Dichte: 1,45 g/cm$^3$) mit 13,3 l/h dosiert. Danach wird die Kieselsäuresuspension mit 55,5%iger Schwefelsäure (Dichte 1,45 g/cm$^3$) auf einen pH-Wert von 3,5 eingestellt, was durch 35 Minuten dauernden Säurezufluß mit 17,5 l/h geschieht. Auch während dieser Phase der Sauerstellung der Suspension wird mit Hilfe des Dissolvers fortlaufend dispergiert. Die auf diese Art gescherte Kieselsäuresuspension wird auf einer Filterpresse filtriert und gewaschen. Der so erhaltene Filterkuchen weist einen Feststoffgehalt von 21% auf. Seine Menge beträgt 240 kg.

100 kg dieses Filterkuchens werden anschließend in einem Technikumstrockenschrank getrocknet und mit einer Stiftmühle vermahlen. Man erhält 21 kg eines feindispersen weißen Pulvers, wobei dieses Pulver in einem langsam laufenden Lödige-Mischer vorgelegt und mit 100 kg des obigen restlichen Filterkuchens vermischt wird, wonach der Feststoffgehalt der sich bildenden Kieselsäuremasse bei 33% liegt.

Anschließend wird das auf diese Weise hergestellte Kieselsäurematerial (33% SiO$_2$) auf einem Zahnwalzengranulator zu Zylindergranulaten der Größe 1,2 mm $\varnothing$ und 2 mm Länge verpreßt. Der eingesetzte Zahnwalzengranulator hat die folgenden Kenndaten:

2-Zahnwalzenformmaschine, Leistung 4 kW
Regelgetriebe: 1 : 4
Angewandte mittlere Antriebsdrehzahl: $n_2 = 40$ min
Anzahl der Zähne: 25
Modul: 8
Teilkreisdurchmesser: 200 mm
Arbeitsbreite: 40 mm
Düsendurchmesser: 1,2 mm $\leq$ d $\leq$ 2,0 mm
Anzahl der Düsen pro Zahnlücke: 52
Düsenlänge: 2−4 mm
Mittlere Durchsatzmenge an feuchter Fällungskieselsäuremasse mit 33% Trockensubstanz: 150 kg/h
Bevorzugte Scherspannung: $\tau = 2 \cdot 10^{-3}$ kg/cm$^2$ s
Angewandte Scherspannung: $1 \times 10^{-3}$ kg/cm$^2$ $\cdot$ s $\leq \tau \leq 3 \times 10^{-3}$ kg/cm$^2$ s

Die feuchten Zylindergranulate werden anschließend in einem Schwingfließbett-Trockner mit 0,6 m$^2$ freier Fläche und 0,3 mm Durchmesser der Lochung des Anströmbodens, getrocknet. Dabei wird eine Anströmgeschwindigkeit von 1,2 m/sec und eine Fließbetthöhe von 150−200 mm eingehalten. Die Temperatur der Trocknungsluft beträgt 118−119°C, die Trocknungszeit 6 Minuten. Die Trocknungsluftmenge beträgt 2600 m$^3$/h. Das erhaltene trockene Kieselsäuregranulat weist die folgenden physikalisch-chemischen Daten auf:

| | |
|---|---|
| Stampfgewicht (DIN 53 194) | 230 g/l |
| Granulatabmessungen | d = 1,2 mm; l = 2 mm |
| l/d-Verhältnis | = 1,7 |
| Staubgehalt (DIN 53 583) | 0,3 Gew.-% |
| Abrieb (DIN 53 583) | 0,2 Gew.-% |
| Einzelgranulathärte | 140 g |

## Beispiel 2

Eine Kieselsäuresuspension wird gemäß Beispiel 1 hergestellt. Dabei wird jedoch nicht während der ersten 90 Minuten, d. h. während der alkalischen Fällungsphase, sondern erst mit Beginn der sogenannten »Sauerstellungsphase« für eine Dauer von 35 Minuten lang mit Hilfe des Dissolvers fortlaufend dispergiert.

Nach dem Filtrieren und Waschen erhält man 230 kg eines Filterkuchens mit 20% Feststoffgehalt.

In einem langsam laufenden Lödige-Mischer werden 15 kg eines gemäß Beispiel Nr. 1 hergestellten, feindispersen Kieselsäurepulvers vorgelegt und mit 66 kg des obigen (nach Beispiel Nr. 2) präparierten Filterkuchens vermischt, wobei sich der Feststoffgehalt der sich bildenden Fällungskieselsäuremasse auf einen Wert von 33% einstellt.

6

Anschließend wird die auf diese Weise hergestellte rieselfähige Fällungskieselsäuremasse mit 33% SiO$_2$ auf dem Zahnwalzengranulator gemäß Beispiel 1 zu zylinderförmigen Granulaten der Größe 1,2 mm Ø' und 2,0 mm Länge verpreßt, wobei die in Beispiel Nr. 1 erwähnten Randbedingungen eingehalten werden.

Die feuchten Zylindergranulate werden in dem Schwingfließbett-Trockner gemäß Beispiel 1 unter folgenden Bedingungen getrocknet:

| | |
|---|---|
| — Ausströmungsgeschwindigkeit der Trocknungsluft | 1,7 m/sec |
| — Trocknungszeit | 4 Minuten |
| — Trocknungslufttemperatur | 200° C |
| — Trocknungsluftmenge | 3570 m³/h |

Die ermittelten physikalisch-chemischen Daten der Fällungskieselsäuregranulate sind:

| | |
|---|---|
| Stampfgewicht (DIN 53 194) | 280 g/l |
| Granulatabmessungen | d = 1,2 mm; l = 2 mm |
| l/d-Verhältnis | = 1,7 |
| Einzelgranulathärte | 145 g |
| Staubgehalt (DIN 53 583) | 0,2 Gew.-% |
| Abrieb (DIN 53 583) | 0,2 Gew.-% |

Beispiel 3

Die Herstellung der Fällungskieselsäure erfolgt gemäß Beispiel 1. Die Fällungskieselsäuresuspension wird erst nach der Sauerstellung bei pH-Wert von 3,5 30 Minuten lang mit dem Dissolver dispergiert. Nach erfolgter Filtration und nach dem Auswaschen des Filterkuchens besitzt dieser einen Feststoffgehalt von 17%. Es fallen ca. 295 kg Filterkuchen an.

100 kg dieses Filterkuchens werden sodann in einem Hordentrockenschrank getrocknet und mit einer Stiftmühle vermahlen. Es fällt eine Menge von 17 kg eines feindispersen Kieselsäurepulvers an.

17 kg dieses Fällungskieselsäurepulvers werden mit Hilfe der geschilderten Mischtechnik mit 66 kg Fällungskieselsäurefilterkuchen in die zu granulierende Kieselsäuremasse mit 32% Feststoffgehalt überführt und im Anschluß daran mit der 2-Zahnwalzenmaschine gemäß Beispiel 1 zu Zylindergranulaten der Größenabmessungen von 1,5 mm Durchmesser und 4 mm Länge verpreßt. Dabei sind die in Beispiel 1 angeführten Randbedingungen der Naßgranulierung unbedingt einzuhalten. Es folgt die chargenweise Trocknung der Naßgranulate im Schwingfließbett-Trockner gemäß Beispiel 1 unter folgenden Bedingungen:

| | |
|---|---|
| — Trocknungszeit: | 25 Minuten |
| — Trocknungslufttemperatur: | 310° C |
| — Staubmenge im Filter: | 7% ( ≙ 1,9 kg) |
| — Granulatmenge (naß): | 83 kg |
| — Granulatmenge (trocken): | 24,7 kg |

Die Kenndaten der trockenen Fällungskieselsäuregranulate lauten:

| | |
|---|---|
| Stampfgewicht (DIN 53 194) | 282 g/l |
| Granulatabmessungen | d ≤ 1,5 mm; l = 2 – 3 mm |
| Granulat-Einzelkornhärte | 157 pond |
| l/d-Verhältnis | 1,3 – 2,0 |
| Staubgehalt | 0,4 Gew.-% |
| Abrieb | 0,3 Gew.-% |

Beispiel 4

Die Herstellung der Fällungskieselsäure erfolgt gemäß Beispiel 1. Nach der 90. Minute der Fällung, d. h. nach Beendigung der alkalischen Fällungsphase, wird der Zufluß der Schwefelsäure zunächst gestoppt und die alkalische Fällungskieselsäuresuspension 30 Minuten lang mit dem Dissolver geschert. Danach wird die Suspension gemäß der Beschreibung in Beispiel 1 bis zu einem pH-Wert von 3,5 angesäuert, filtriert und auf der Filterpresse gewaschen. Man erhält 280 kg an Fällungskieselsäurefilterkuchen mit einem Feststoffgehalt von 18%.

120 kg dieses Fällungskieselsäurefilterkuchens werden anschließend in einem Trockenschrank getrocknet und mit einer Stiftmühle vermahlen. Dabei fallen ca. 22,0 kg eines feinteiligen Fällungskieselsäurepulvers an, das in Fortsetzung des Verfahrensweges sodann mit 91 kg des obigen Fällungskieselsäurefilterkuchens in die feuchte, pulverförmige und zu granulierende Fällungskieselsäuremasse mit einem Feststoffgehalt von 32% überführt und nachfolgend im Zahnwalzengranulator gemäß Beispiel 1 zu zylinderförmigen Naß-Granulaten mit einem Durchmesser von 1,5 mm und 4 mm Länge verpreßt werden. Dies geschieht unter Beachtung der für die Naßgranulierung festgelegten Randbedingungen gemäß Beispiel 1.

Die chargenweise Fließbett-Trocknung der 113 kg Fällungskieselsäuregranulate vollzieht sich unter folgenden Bedingungen:

| | |
|---|---|
| — Trocknungszeit: | 19 Minuten |
| — Trocknungslufttemperatur: | 310°C |

Es werden 34,9 kg eines staubarmen Trockengranulates erhalten. Etwa 3,6% der insgesamt hergestellten Trockengranulatmenge — das sind 1,3 kg — finden sich im Staubfilter wieder.

Das erhaltene Fällungskieselsäuregranulat weist die folgenden Kenndaten auf:

| | |
|---|---|
| Stampfgewicht (DIN 53 194) | 278 g/l |
| Granulatabmessungen | $d \leq 1,5$ mm; $l = 2-3$ mm |
| Granulat-Einzelkornhärte | 111 g |
| Staubgehalt*) | 2% |
| l/d-Verhältnis | 1,3—2,0 |
| Staubgehalt (DIN 53 583) | 0,4 Gew.-% |
| Abrieb (DIN 53 583) | 0,2 Gew.-% |

*) bestimmt nach der in dieser Anmeldung beschriebenen Methode

## Beispiel 5

Es wird eine Fällungskieselsäuresuspension gemäß Beispiel 4 hergestellt. Während des 30minütigen Scherintervalls werden der Fällungskieselsäuresuspension folgende Mengen an Additiven zugesetzt:

— 0,5 kg einer 22%igen Latex-Emulsion, das sind 1% Latexemulsion, bezogen auf den $SiO_2$-Gehalt der Kieselsäuresuspension,

— 1,4 g eines Alterungsschutzmittels auf der Basis eines alkalisierten Styrolphenolharzes, Wingstay V®, das sind 1,25%, bezogen auf die Wirksubstanz der Latexemulsion,

— 2,2 g eines Stabilisators auf der Basis eines Polyglykoläthers, Genapol®, das sind 2%, bezogen auf die Wirksubstanz der Latexemulsion.

Nach dem Schervorgang wird die Fällungssuspension auf einen pH-Wert von 3,5 gemäß Beispiel 1 angesäuert. Nach der Filtration und dem Auswaschen auf der Filterpresse erhält man 252 kg eines Fällungskieselsäurefilterkuchens mit einem Feststoffgehalt von 20%.

20 kg eines nach Beispiel 4 hergestellten, trockenen, feinteiligen Fällungskieselsäurepulvers werden mit 88 kg des obigen, Additive enthaltenden Fällungskieselsäurefilterkuchens im Lödige-Mischer zu einer Kieselsäuremasse mit einem Feststoffgehalt von 33% verarbeitet und nachfolgend im Zahnwalzengranulator gemäß Beispiel 1 zu zylinderförmigen Naßgranulaten mit einem Durchmesser von 1,5 mm und 4 mm Länge verpreßt. Die chargenweise Fließbett-Trocknung des 108-kg-Kieselsäurenaßgranulates vollzieht sich unter folgenden Bedingungen:

| | |
|---|---|
| — Trocknungszeit: | 23 Minuten |
| — Trocknungslufttemperatur: | 320°C |

Es werden 33 kg eines staubarmen Trockengranulates erhalten. 7,2% der total hergestellten Trockengranulatmenge — das sind 2,6 kg — findet sich im Staubfilter des Fließbett-Trockners wieder.

Das erhaltene Fällungskieselsäuregranulat weist die folgenden Kenndaten auf:

| | |
|---|---|
| Stampfgewicht (DIN 53 194) | 291 g/l |
| Granulatabmessungen | $d \leq 1,5$ mm; $l = 2-3$ mm |
| Granulat-Einzelkornhärte | 121 g |
| l/d-Verhältnis | 1,3—2,0 |
| Staubgehalt (DIN 53 583) | 0,2 Gew.-% |
| Abrieb (DIN 53 583) | 0,2 Gew.-% |

Beispiel 6

Die Herstellung der Kieselsäuresuspension erfolgt gemäß Beispiel 1, jedoch mit folgenden Abweichungen von der dort gegebenen Fällungsvorschrift:

Es wird eine Fälltemperatur von 90°C gewählt. Nach der 90. Minute wird zwar die Sauerstellung durch Ansäuern mit Schwefelsäure begonnen, jedoch wird zunächst nur bis zu einem pH-Wert von 8,5 angesäuert und bei 90°C eine Stabilisierungsperiode von 30 Minuten eingelegt.

Danach wird die Ansäuerung bis zu einem pH-Wert von 3,5 mit 55,5%iger Schwefelsäure bei einer Säuredosierung von 17,5 l/h fortgesetzt.

Die Dissolver-Dispergierung wird nicht während der Fällungsphase, sondern erst nach der Sauerstellung auf einen pH-Wert von 3,5 für die Dauer von 30 Minuten vorgenommen, dieses jedoch ohne äußere Wärmezufuhr.

Die auf diese Weise gescherte Fällungskieselsäuresuspension wird auf einer Filterpresse filtriert und gewaschen. Der erhaltene Fällungskieselsäurefilterkuchen hat einen Feststoffgehalt von 20%. Es wird eine Menge von 252 kg erhalten.

100 kg dieses Fällungskieselsäurefilterkuchens werden anschließend in einem Technikumstrockenschrank getrocknet und mit einer Stiftmühle vermahlen. Man erhält 20 kg einer feinpulvrigen Fällungskieselsäure. Diese wird in einem langsam laufenden Lödige-Mischer vorgelegt und mit 97 kg des obigen Fällungskieselsäurefilterkuchens vermischt, wonach der Feststoffgehalt der sich bildenden Fällungskieselsäuremasse bei 32% liegt. Diese Masse wird danach auf einen Zahnwalzengranulator gemäß Beispiel 1 zu Zylindernaßgranulaten mit einem Durchmesser von 1,5 mm und 4 mm verpreßt, wobei die Randbedingungen gemäß Beispiel 1 eingehalten werden.

Die Fließbett-Trocknung des 117 kg Fällungskieselsäurenaßgranulates erfolgt unter den nachfolgend genannten Bedingungen:

— Trocknungszeit: 20 Minuten
— Trocknungslufttemperatur: 350°C

Es werden 34 kg eines Trockengranulates erhalten. 9% der insgesamt hergestellten Trocknungsgranulatmenge — das sind 3,4 kg — finden sich im Staubfilter des Fließbett-Trockners.

Das Kieselsäuregranulat besitzt folgende Kenndaten:

| | |
|---|---|
| Stampfgewicht (DIN 53 194) | 256 g/l |
| Granulatabmessungen | $d \leq 1,5$ mm; $l = 2-3$ mm |
| Einzelgranulathärte | 88 g |
| Staubgehalt*) | 1% |
| Abrieb*) | 0,15% |
| l/d-Verhältnis | 1,3 — 2,0 |
| Abrieb (DIN 53 583) | 0,2 Gew.-% |
| Staubgehalt (DIN 53 583) | 0,4 Gew.-% |

*) = Messung nach der im beschreibenden Teil angegebenen Methode

Beispiel 7

30 kg eines nach Beispiel 6 hergestellten Fällungskieselsäure-Filterkuchens mit einem Feststoffgehalt von 20% werden mit 6,5 kg des ebenfalls nach Beispiel 6 gewonnenen trockenen Fällungskieselsäurepulvers sowie mit 0,1 kg Äthylenglykol (bezogen auf Trockensubstanz des Filterkuchens sind dies 1,6 kg) im Lödige-Mischer in eine Fällungskieselsäuremasse mit einem Feststoffgehalt von 33% überführt. Nachfolgend wird diese Fällungskieselsäuremasse mit dem Zahnwalzengranulator gemäß Beispiel 1 zu zylinderförmigen Naßgranulaten mit einem Durchmesser von 1,5 mm und 4 mm Länge verpreßt. Die chargenweise Fließbett-Trocknung des 37 kg Naßgranulates wird unter folgenden Bedingungen vorgenommen:

— Trocknungszeit: 14 Minuten
— Trocknungslufttemperatur: 300°C

Es werden 11 kg eines staubarmen Trockengranulates erhalten. 10% der insgesamt hergestellten Trockengranulatmenge — das sind 1,2 kg — finden sich im Staubfilter des Fließbett-Trockners.

Das erhaltene Fällungskieselsäuregranulat weist die folgenden Kenndaten auf:

| | |
|---|---|
| Stampfgewicht (DIN 53 194) | 268 g/l |
| Granulatabmessungen | d 1,5 mm; $l = 2-3$ mm |
| Einzelgranulathärte | 96 g |

| Abrieb*) | 0,18% |
|---|---|
| Staubgehalt*) | 1,5% |
| l/d-Verhältnis | 1,3 – 2,0 |
| Abrieb (DIN 53 583) | 0,3 Gew.-% |
| Staubgehalt (DIN 53 583) | 0,2 Gew.-% |

\*) Messung nach der im beschreibenden Teil angegebenen Methode

Beispiel 8

Die anwendungstechnische Prüfung der gemäß Beispielen 1–7 hergestellten staubarmen Kieselsäuregranulate in Kautschuk — Cariflex® 1509 — erfolgt im Vergleich zu den Fällungskieselsäuregranulaten gemäß DE-PS 1 807 714. Die Prüfdaten sind in Tabellen I, II und III zusammengestellt:

Tabelle I

| | Prüfrezeptur u. Reihenfolge der Mischungsherstellung | | | | | | | | |
|---|---|---|---|---|---|---|---|---|---|
| | 1 | 2 | 3 | 4 | 5 | 6 | 7 | A | B |
| Cariflex® 1509 | 100 | | | | | | | | |
| Fällungskieselsäure-granulat nach Beispiel | | | | | | | | | |
| 1 | 50 | — | — | — | — | — | — | — | — |
| 2 | — | 50 | — | — | — | — | — | — | — |
| 3 | — | — | 50 | — | — | — | — | — | — |
| 4 | — | — | — | 50 | — | — | — | — | — |
| 5 | — | — | — | — | 50 | — | — | — | — |
| 6 | — | — | — | — | — | 50 | — | — | — |
| 7 | — | — | — | — | — | — | 50 | — | — |
| Fällungskieselsäure-granulat A gemäß DE-PS 18 07 714 | — | — | — | — | — | — | — | 50 | — |
| Fällungskieselsäure-granulat B gemäß DE-PS 18 07 714 | — | — | — | — | — | — | — | — | 50 |
| ZnO, aktiv | 2 | | | | | | | | |
| Stearinsäure | 2 | | | | | | | | |
| Diäthylenglykol | 3 | | | | | | | | |
| Triäthanolamin | 0,5 | | | | | | | | |
| Vulkazit® D | 1,2 | | | | | | | | |
| Vulkazit® DM | 0,8 | | | | | | | | |
| Schwefel | 2,5 | | | | | | | | |

Tabelle II

| | Unvulkanisierte Mischung Mooney-Prüfung nach DIN 53 523/524: | | | | | | | | |
|---|---|---|---|---|---|---|---|---|---|
| | 1 | 2 | 3 | 4 | 5 | 6 | 7 | A | B |
| ML 4 (100°C) | 83 | 76 | 112 | 116 | 111 | 66 | 68 | 84 | 64 |
| t 5 (121°C) (min) | 15,0 | 11,2 | 14,7 | 12,4 | 15,9 | 11,0 | 8,6 | 10,4 | 13,8 |
| t 35 (121°C) (min) | 18,6 | 13,9 | 18,5 | 18,7 | 20,3 | 13,7 | 10,6 | 12,5 | 11,1 |

Tabelle III

| | Beispiel | | | | | | | | |
|---|---|---|---|---|---|---|---|---|---|
| Ergebnisse der gummitechnischen Prüfung vulkanisierte Mischung; Vulkanisationstemperatur: 160°C | | | | | | | | | |
| | 1 | 2 | 3 | 4 | 5 | 6 | 7 | A | B |
| Vulkanisationszeit: (Min.) | 8 | 8 | 8 | 8 | 8 | 8 | 8 | 8 | 8 |
| | 12 | 12 | 12 | 12 | 12 | 12 | 12 | 12 | 12 |
| Zugfestigkeit: (DIN 53 504) | 147 | 142 | 160 | 168 | 171 | 139 | 124 | 153 | 130 |
| | 135 | 148 | 150 | 149 | 156 | 134 | 121 | 146 | 123 |
| Spannungswert 300: | 48 | 34 | 44 | 43 | 44 | 45 | 40 | 38 | 35 |
| | 49 | 33 | 45 | 43 | 44 | 45 | 41 | 38 | 44 |
| Spannungswert 500: | 99 | 74 | — | — | — | — | — | 82 | — |
| | 102 | 73 | — | — | — | — | — | 83 | — |
| Bruchdehnung | 602 | 640 | 651 | 675 | 686 | 580 | 570 | 636 | 599 |
| | 572 | 640 | 634 | 642 | 653 | 547 | 553 | 622 | 577 |
| Stoßelastizität (DIN 53 512) | 35 | 34 | 41 | 40 | 41 | 40 | 39 | 36 | 39 |
| | 34 | 33 | 40 | 41 | 42 | 40 | 41 | 37 | 39 |
| Shore-A-Härte | 73 | 69 | 76 | 76 | 70 | 68 | 70 | 67 | ' |
| Shore-A-Härte (DIN 53 505) | 73 | 69 | 76 | 76 | 76 | 70 | 68 | 70 | 67 |
| | 73 | 68 | 77 | 76 | 75 | 70 | 69 | 71 | 68 |

Die Ergebnisse der gummitechnischen Prüfung lassen sich wie folgt im Vergleich zu den Granulaten des Standes der Technik zusammenfassen: Dabei sind die Ergebnisse der Mischungen Nr. 1—5 mit denen der Mischung A und die der Mischungen Nr. 6 und 7 mit denen der Mischung B vergleichbar:

## Mooney-Prüfung

In der Mooney-Prüfung liegen die Werte der Mischungen 1 und 2 gleich oder etwas höher und die Werte der Mischungen 4 und 6 deutlich über der Bezugsmischung A. Das Vulkanisationsverhalten der Mischungen 1—5, ausgedrückt durch die t5- und t35-Werte, ist langsamer als das der Bezugsmischung A.

Die Mooney-Viskositätswerte der Mischungen Nr. 6 und 7 liegen im Vergleich zu ihrer Bezugsmischung B geringfügig darüber, während die Vulkanisation der Mischungen Nr. 6 und 7 geringfügig langsamer als die der Bezugsmischung B abläuft.

## Statische Daten

Bei den Modul-300-Werten der Mischungen Nr. 1, 3, 4 und 5 zeigt sich eine mehr oder weniger ausgeprägte Tendenz zu höheren Werten im Vergleich zur Referenzmischung A. Der Modul-300-Wert der Mischungen Nr. 6—7 liegen deutlich über dem Wert-Niveau ihrer Referenzmischung B. Der Modul-300-Wert der Mischung 2 kommt dem der Bezugsmischung A sehr nahe.

Die Shore-A-Härte der Mischungen Nr. 1, 3, 4 und 5 liegen über dem Niveau der Shore-A-Härte von der Referenzmischung A die Shore-A-Härte der Mischung Nr. 2 auf dem Niveau der Bezugsmischung Nr. 8. Für die Shore-A-Härten der Mischungen 6 und 7 läßt sich kaum ein Unterschied zur Referenzmischung B feststellen.

## Dispergiertest

Füllstoffe werden um so schwerer in Elastomeren verteilt, je niedriger die Viskosität des Elastomeren ist. Deshalb ist Butylkautschuk (ML=50) das für derartige Untersuchungen geeignete Material. Der Dispergiertest besteht darin, daß in Abhängigkeit von der Mischzeit Butylkautschukmischungen hergestellt werden, eine konstante Menge (100 g) der Butylkautschukmischung durch ein geeignetes Sieb gestrainert wird und der Strainersiebrückstand direkt oder indirekt auf seinen Füllstoffgehalt hin untersucht wird.

Nachfolgend wird eine Beschreibung des Dispergiertestes sowie seiner Auswertungsweise angegeben:

## Versuchsdurchführung

Rezeptur

| | |
|---|---|
| Polisar® Butyl 301 | 100,0  Gewichtsteile |
| Eisenoxidbatch*) | 16,45 Gewichtsteile |
| Weichmacher KP 140 | 5,6  Gewichtsteile |
| Ultrasil® VN 3 | 50,0  Gewichtsteile |

### Einsatzmengen für 2,5-l-Kneter

| | |
|---|---|
| Polisar® Butyl 301 | 1634 |
| Eisenoxidbatch | 269 |
| Weichmacher KP 140 | 91 |
| Füllstoff | 817 |

### Mischungsherstellung

| | |
|---|---|
| Mischaggregat | 2,5-l-Labor-Innenmischer Homrich LK 2,5 |
| Schaufeldrehzahl | 48 UpM |
| Kneterdurchflußtemperatur | 80° C |

Mischanweisung

| Zeit, min | |
|---|---|
| 0 | Kautschuk und Eisenoxidbatch werden 2 min  lang mastiziert |
| 2 | 1/2 Füllstoff |
| 3 | 1/3 Füllstoff und Weichmacher |
| 4 | letztes Drittel Füllstoff |
| 7 | Ende des Mischvorganges der ersten Mischung (Gesamtmischzeit des Füllstoffes: 5 min) |
| 8 | Ende des Mischvorganges der zweiten Mischung (Gesamtmischzeit des Füllstoffes: 6 min) |
| 9 | Ende des Mischvorganges der dritten Mischung (Gesamtmischzeit des Füllstoffes: 7 min) |

Jeweils am Ende der Knetermischzeit wird die Mischung auf der Walze zum Fell ausgezogen.

### Strainern der Mischung

Es werden 100 g jeder Mischung gestrainert.

| | |
|---|---|
| Siebdurchmesser | 18 mm |
| Effektiver Siebdurchmesser | 10 mm |
| Siebmaschenweite (Tyler) | 150 mesh |
| Extruder | Brabender-Plastograph Typ Pl 3 mit vorgeschaltetem Spritzkopf Typ 200 D |
| Schneckenumdrehungsgeschwindigkeit | 60 UpM |
| Spritzkopftemperatur | 80° C |

### Pressen des Siebrückstandes

Zur Strainersiebrückstandsbestimmung wird verwendet, was nach Schnitt in 5 mm Abstand vom Sieb als Gummimischung verbleibt. Dieser Mischungsrückstand wird vom Sieb getrennt und zwischen 2 Alufolien verpreßt.

| | |
|---|---|
| Pressen | Labor-Vulkanisierpresse |
| Preßdruck | 190 atü |
| Pressentemperatur | 155° C |
| Preßzeit | 5 sec |
| Aluminiumfolie | 0,1 mm Dicke |
| Folienfläche | 150 mm × 150 mm |

**0 003 217**

Präparierung des gepreßten Materials .

Das gepreßte Material wird in flüssigen Stickstoff getaucht. Auf diese Weise kann der Kautschuk von der Alufolie abgelöst werden, ohne die Alufolie zu beschädigen.

Die Gravuren des Siebrückstandes auf der Aluminiumfolie werden in einem verdunkelten Raum fotographiert und um den Faktor 2 vergrößert.

Auswertung

Zur optischen Beurteilung wird die Zahl der Gravuren und ihre Breite auf der Fotographie herangezogen.

Herstellung des Eisenoxidbatches

Rezeptur
| | |
|---|---|
| Polisar® Butyl 301 | 700,0 Gewichtsteile |
| Eisenoxid | 700,0 Gewichtsteile |
| Mischaggregat | Laborwalze |
| Walzengröße | Durchmesser 200 mm; Arbeitsbreite 350 mm |
| Walzentemperatur | 70° C |
| Walzenfriktion | 1 : 1,4 |

Die Ergebnisse der Dispersionsprüfung gemäß der beschriebenen Prüfung in Butylkautschuk weisen für die Mischungen Nr. 3, 4 und 7 ein sehr gutes Dispergierverhalten aus; für die anderen Mischungen Nr. 1, 2, 5 und 6 ergibt sich annähernd das Bild der Dispergierbarkeit der Referenzgranulate A und B.

Zusammenfassend kann gesagt werden, daß das gummitechnische Verhalten der erfindungsgemäßen Fällungskieselsäuregranulate kaum oder nur geringfügig vom Verhalten der Fällungskieselsäuregranulate gemäß DE-PS 1 807 714 abweicht. Etwaige, notwendige Korrekturen lassen sich durch entsprechende Gestaltung der Mischungsrezeptur ohne Schwierigkeiten anbringen.

**Patentansprüche**

1. Fällungskieselsäuregranulate, gekennzeichnet durch die folgenden physikalisch-chemischen Kenndaten:

| | |
|---|---|
| Stampfgewicht (DIN 53 194) | 200 – 320 g/l |
| l/d-Verhältnis | $0,8 \leq l/d \leq 3,5$ |
| Einzelgranulathärte | 80 – 175 g |
| Staubgehalt (DIN 53 583) | 0,2 – 0,4 Gew.-% |
| Abrieb (DIN 53 583) | 0,2 – 0,3 Gew.-% |

2. Verfahren zur Herstellung von Fällungskieselsäuregranulaten mit den folgenden physikalisch-chemischen Kenndaten:

| | |
|---|---|
| Stampfgewicht (DIN 53 194) | 200 – 320 g/l |
| l/d-Verhältnis | $0,8 \leq l/d \leq 3,5$ |
| Einzelgranulathärte | 80 – 175 g |
| Staubgehalt (DIN 53 583) | 0,2 – 0,4 Gew.-% |
| Abrieb (DIN 53 583) | 0,2 – 0,3 Gew.-% |

aus einem wasserhaltigen Fällungskieselsäurefilterteig, dadurch gekennzeichnet, daß man eine Fällungskieselsäuresuspension während und/oder nach deren Bildung intensiv schert, die Fällungskieselsäure abfiltriert, wäscht, zu dem so erhaltenen Fällungskieselsäurefilterkuchen pulverförmige Fällungskieselsäure hinzumischt, wobei man die Zugabe der pulverförmigen Fällungskieselsäure zu dem Fällungskieselsäurekuchen kontinuierlich oder diskontinuierlich in Mischern derart durchführt, daß keine Formgebung der Fällungskieselsäuremasse stattfindet, die Fällungskieselsäuremasse rieselfähig bleibt und dabei nicht in den thixotropen Pastenzustand übergeht, anschließend die so erhaltene Fällungskieselsäuremasse bei einem Feststoffgehalt von 28 bis 40 Gew.-%, vorzugsweise von 30 bis 34 Gew.-%, mit einem Granulator zur Herstellung von Fällungskieselsäuregranulaten unter Einhaltung eines definierten Verhältnisses von Scherspannung/

Zeiteinheit $\tau$, wobei ein Bereich von

$$1 \times 10^{-3}\,\text{kg/cm}^2 \cdot \text{s} \leq \tau \leq 3 \times 10^{-3}\,\text{kg/cm}^2\,\text{s},$$

eingehalten wird, und im Granulator der Düsendurchmesser (d) sowie die Düsenlänge (l) innerhalb 1,0 mm $\leq$ d $\leq$ 2,0 mm bzw. 1,0 mm $\leq$ l $\leq$ 4,0 mm beträgt, verpreßt und diese einer Kurzzeittrocknung unterwirft.

3. Verfahren nach Anspruch 2, dadurch gekennzeichnet, daß man die Scherung der Fällungskieselsäuresuspension während des gesamten Zeitraumes ihrer Bildung durchführt.

4. Verfahren nach den Ansprüchen 2 und 3, dadurch gekennzeichnet, daß man die Scherung der Fällungskieselsäuresuspension nach ihrer Bildung bei alkalischem pH-Wert, vorzugsweise bei einem pH-Wert von 7 − 12, durchführt.

5. Verfahren nach den Ansprüchen 2 und 3, dadurch gekennzeichnet, daß man die Scherung der Fällungskieselsäuresuspension nach ihrer Bildung bei saurem pH-Wert, vorzugsweise bei einem pH-Wert von 2 − 7, durchführt.

6. Verfahren nach den Ansprüchen 2 bis 5, dadurch gekennzeichnet, daß man eine Fällungskieselsäuresuspension schert, welche einen Feststoffgehalt von 30 bis 100 g/l aufweist.

7. Verfahren nach den Ansprüchen 2 bis 6, dadurch gekennzeichnet, daß man die Fällungskieselsäuresuspension maximal 130 Min., vorzugsweise 10 bis 120 Minuten, schert.

8. Verfahren nach den Ansprüchen 2 bis 7, dadurch gekennzeichnet, daß der Fällungskieselsäurefilterkuchen einen Feststoffgehalt von 15 bis 28 Gew.-% aufweist.

9. Verfahren nach den Ansprüchen 2 bis 8, dadurch gekennzeichnet, daß man als pulverförmige Fällungskieselsäure eine Fällungskieselsäure einsetzt, welche aus dem Filterkuchen durch Trocknung und Vermahlung erhalten worden ist.

10. Verfahren nach Anspruch 9, dadurch gekennzeichnet, daß man als pulverförmige Fällungskieselsäure eine Fällungskieselsäure einsetzt, welche aus einer Fällungskieselsäuresuspension gewonnen wurde, die vor dem Abfiltrieren nicht geschert wurde.

11. Verfahren nach Anspruch 9, dadurch gekennzeichnet, daß man als pulverförmige Fällungskieselsäure eine Fällungskieselsäure einsetzt, welche aus eier Fällungskieselsäuresuspension gewonnen wurde, die vor dem Abfiltrieren geschert wurde.

12. Verfahren nach den Ansprüchen 2 bis 11, dadurch gekennzeichnet, daß man 1 − 5 Gew.-% mit Wasser mischbare mehrwertige Alkohole, z. B. Äthylenglykol, oder 1 − 5 Gew.-% stabilisierte und mit Alterungsschutzmitteln versetzte Latexemulsion, z. B. eine 22%ige Emulsion von Naturkautschuk in Wasser, während der Zugabe der pulverförmigen Fällungskieselsäure zugibt.

13. Verfahren nach den Ansprüchen 2 bis 12, dadurch gekennzeichnet, daß man als Granulator einen Zahnwalzengranulator einsetzt.

14. Verfahren nach den Ansprüchen 2 bis 13, dadurch gekennzeichnet, daß man die Fällungskieselsäuregranulate in Form von Zylindergranulaten der Abmessung von 1 mm Durchmesser × 1 mm Höhe bis 1,5 mm Durchmesser × 5 mm Höhe herstellt.

15. Verfahren nach den Ansprüchen 2 bis 14, dadurch gekennzeichnet, daß man die Kurzzeittrocknung der Fällungskieselsäuregranulate während eines Zeitraumes von 5 bis 25 Minuten im Fließbett durchführt.

16. Verwendung der Fällungskieselsäuregranulate nach Anspruch 1 als Füllstoff für Kautschukmischungen.

**Claims**

1. Precipitated silica granulates, characterised by the following physical-chemical characteristics:

| | |
|---|---|
| Powder density (DIN 53 194) | 200 − 320 g/l |
| l/d ratio | 0.8 ≤ l/d ≤ 3.5 |
| Individual granulate hardness | 80 − 175 ponds |
| Dust content (DIN 53 583) | 0.2 − 0.4% by weight |
| Abrasion (DIN 53 583) | 0.2 − 0.3% by weight |

2. A process for the production of precipitated silica granulates having the following physical-chemical characteristics:

| | |
|---|---|
| Powder density (DIN 53 194) | 200 − 320 g/l |
| l/d ratio | 0.8 ≤ l/d ≤ 3.5 |
| Individual granulate hardness | 80 − 175 ponds |
| Dust content (DIN 53 583) | 0.2 − 0.4% by weight |
| Abrasion (DIN 53 583) | 0.2 − 0.3% by weight |

from a water-containing precipitated silica filter paste, characterised in that a precipitated silica suspension is intensively sheard during and/or after its formation, the precipitated silica is filtered off and washed, powdered precipitated silica is added to the precipitated silica filter cake thus obtained, whereby the powder-from precipitated silica is added to the precipitated silica cake either continuously or at intervals in mixers in such a way that the precipitated silica mass does not assume any particular shape, but instead remains fluid, i.e. does not change into a thixotropic paste, the precipitated silica mass thus obtained which has a solids content of from 28% by weight to 40% by weight and preferably from 30 to 34% by weight, ist treated in a granulator in which a specific ratio of shear stress/unit of time $\tau$ in a range of

$$1 \times 10^{-3} \text{ kg/cm}^2 \cdot \text{s} \leq \tau \leq 3 \times 10^{-3} \text{ kg/cm}^2 \cdot \text{s}$$

is maintained and in which the diameter and length of the nozzle lie within $1{,}0 \text{ mm} \leq d \leq 2 \text{ mm}$ and $1.0 \text{ mm} \leq l \leq 4 \text{ mm}$ to form precipitated silica granulates and the granulates thus obtained are subjected to short-term drying.

3. A process as claimed in Claim 2, characterised in that the precipitated silica suspension is sheard throughout its formation.

4. A process as claimed in Claims 2 and 3, characterised in that the precipitated silica suspension is sheared after its formation at an alkaline pH-value, preferably at a pH-value of from 7 to 12.

5. A process as claimed in Claims 2 and 3, characterised in that the precipitated silica suspension ist sheared after its formation at an acid pH-value, preferably at a pH-value of from 2 to 7.

6. A process as claimed in Claims 2 to 5, characterised in that a precipitated silica suspension having a solids content of from 30 to 100 g/l is sheared.

7. A process as claimed in Claims 2 to 6, characterised in that the precipitated silica suspension is sheared for at most 130 minutes and preferably for between 10 and 120 minutes.

8. A process as claimed in Claims 2 to 7, characterised in that the precipitated silica filter cake has a solids content of from 15 to 28% by weight.

9. A process as claimed in Claims 2 to 8, characterised in that the powder-form precipitated silica used is a precipitated silica which has been obtained from the filter cake by drying and grinding.

10. A process as claimed in Claim 9, characterised in that the powder-form precipitated silica used is a precipitated silica obtained from a precipitated silica suspension which was not sheared before filtration.

11. A process as claimed in Claim 9, characterised in that the powder-form precipitated silica used is a precipitated silica obtained from a precipitated silica suspension which was sheared before filtration.

12. A process as claimed in Claims 2 to 11, characterised in that the addition of 1 to 5% by weight of watermiscible polyhydric alcohols, for example ethylene glycol, or 1 to 5 parts by weight of a stabilised latex emulsion treated with antiagers, for example a 22% emulsion of natural rubber in water, is made during the addition of the powder-form precipitated silica.

13. A process as claimed in Claims 2 to 12, characterised in that the granulator used is a toothed-roll granulator.

14. A process as claimed in Claims 2 to 13, characterised in that the precipitated silica granulates are produced in the form of cylindrical granulates measuring form 1 mm (diameter) × 1 mm (height) to 1.5 mm (diameter) × 5 mm (height).

15. A process as claimed in Claims 2 to 14, characterised in that the short-term drying of the precipitated silica granulates is carried out in a fluidised bed over a perid of from 5 to 25 minutes.

16. The use of the precipitated silica granulates claimed in Claim 1 as a filler for rubber mixtures.

**Revendications**

1. Granulés d'acide silicique précipité, caractérisé en ce qu'ils présentet les données physico-chimiques suivantes:

| | |
|---|---|
| Densité apparente avec tassement (DIN 53 194) | 200 – 320 g/l |
| Rapport l/d | $0{,}8 \leq l/d \leq 3{,}5$ |
| Dureté du grain individuel | 80 – 175 pond |
| Teneur en poussiére (DIN 53 583) | 0,2 – 0,4% en poids |
| Abrasion (DIN 53 583) | 0,2 – 0,3% en poids |

2. Procédé pour la fabrication de granulés d'acide silicique précipité ayant les caractéristiques physico-chimiques suivantes:

| | |
|---|---|
| Densité apparente avec tassement (DIN 53 194) | 200 – 320 g/l |
| Rapport l/d | $0{,}8 \leq l/d \leq 3{,}5$ |

| Dureté du grain individuel | 80 – 175 pond |
| Teneur en poussiére (DIN 53 583) | 0,2 – 0,4% en poids |
| Abrasion (DIN 53 583) | 0,2 – 0,3% en poids |

à partir d'une pâte aqueuse provenant de la filtration d'un précipité d'acide silicique, procédé caractérisé en ce que l'on cisaille énergiquement la suspension d'acide silicique précipité pendant et/ou après sa formation que l'on filtre et lave l'acide silicique précipité, qu'au gâteau de filtre d'acide silicique précipité ainsi obtenu on incorpore, de l'acide silicique précipité pulvérulent que l'on effectue l'incorporation de l'acide silicique précipité pulvérulent dans le gâteau d'acide silicique précipité dans des mélangeurs, de façon continue ou discontinue, de telle manière, qu'aucun formage de la masse d'acide silique précipité n'ait lieu, que le masse d'acide silique précipité rest fluide et ne passe pas à l'état pâteux thixotropique, après quoi on presse la masse d'acide silicique ainsi obtenue, à 28 – 40% en poids, de préférence 30 – 34% en poids de matiére solide, au moyen d'un granulateur avec un rapport défini, effort de cisaillement/unité de temps $\tau$, ce rapport étant de préférence compris entre les limites:

$$1 \times 10^{-3}\,\text{kg/cm}^2 \cdot \text{s} \leq \tau \leq 3 \times 10^{-3}\,\text{kg/cm}^2 \cdot \text{s}$$

et dont le dimétre, ainsi la longueur des buses soient compris dans les limites:

$$1\,\text{mm} \leq d \leq 2\,\text{mm et } 1\,\text{mm} \leq l \leq 4\,\text{mm}$$

pour produire un granulé d'acide silicique précipité, et que l'on soumet ce dernier à un séchage de courte durée.

3. Procédé suivant la revendication 2, caractérisé en ce que l'on effectue le cisaillement de la suspension d'acide silicique précipité pendant toute la durée de sa formation.

4. Procédé suivant l'une des revendications 2 et 3, caractérisé en ce que l'on effectue le cisaillement de la suspension d'acide silicique précipité après sa formation, à un pH alcalin, de préférence compris entre 7 et 12.

5. Procédé suivant l'une des revendications 2 et 3, caractérisé en ce que l'on effectue le cisaillement de la suspension d'acide silicique précipité après sa formation, à un pH acide, de préférence compris entre 2 et 7.

6. Procédé suivant l'une quelconque des revendications 2 – 5, caractérisé en ce que l'on soument au crisaillement une suspension d'acide silicique précipité ayant une teneur en matière solide comprise entre 30 et 100 g/l.

7. Procédé suivant l'une quelconque des revendications 2 à 6, caractérisé en ce que l'on soument au crisaillement la suspension d'acide silicique précipité pendant une durée maximale de 130 minutes, de préférence de 10 à 120 min.

8. Procédé suivant l'une quelconque des revendications 2 à 7, caractérisé en ce que le gâteau de filtre d'acide silicique précipité 15 à 28% en poids de matière solide.

9. Procédé suivant l'une quelconque des revendications 2 à 8, caractérisé en ce que, comme acide silicique précipité pulvérulent, on utilise un acide silicique précipité obtenu à partir du gâteau de filtre par séchage et broyage.

10. Procédé suivant la revendication 9, caractérisé en ce que, comme acide silicique précipité pulvérulent, on utilise in acide silicique précipité obtenu à partir d'une suspension d'acide silicique précipité, qui n'a pas été cisaillée avant la filtration.

11. Procédé suivant la revendication 9, caractérisé en ce que comme acide silicique pulvérulent, on utilise un acide silicique précipité obtenu à partir d'une suspension d'acide silicique précipité qui à été cisaillée avant la filtration.

12. Procédé suivant l'une quelconque des revendications 2 à 11, caractérisé en ce que l'on effectue l'incorporation de 1 – 5% en poids d'alcool polyvalent, miscible à l'eau, par exemple de polyéthylèneglycol, ou de 1 – 5% en poids d'une émulsion de latex stabilisée et munie d'un agent protecteur contre le vieillissement, par exemple une émulsion à 22% de caoutchouc naturel dans l'eau, pendant l'incorporation de l'acide silicique précipité pulvérulent.

13. Procédé suivant l'une quelconque des revendications 2 à 12, caractérisé en ce que comme granulateur, on emploie un granulateur à cylindre denté.

14. Procédé suivant l'une quelconque des revendications 2 à 13, caractérisé en ce que l'on produit le granulé d'acide silicique précipité sous la forme cylindrique, avec des dimensions de 1 mm de diamètre × 1 mm de hauteur, à 1,5 mm de diamètre × 5 mm de hauteur.

15. Procédé suivant l'une quelconque des revendications 2 à 14, caractérisé en ce que l'on effectue le séchage de courte durée du granulé d'acide silicique précipité en lit fluidisé pendant une durée de 5 à 25 minutes.

16. Procédé suivant la revendication 1, caractérisé en ce que les granulés d'acide silicique sont utilisés comme charges dans des mélanges de caoutchouc.

Fig. 1